# EUROPEAN PATENT APPLICATION

(11) **EP 4 843 801 A1**
(43) Date of publication of application: **25.11.2026**
(21) Application number: 24918173.6
(22) Date of filing: 05.11.2024
(51) Int. Cl.: B60H 1/00

(54) **CONTROL METHOD FOR THERMAL MANAGEMENT SYSTEM, ELECTRONIC DEVICE, COMPUTER READABLE STORAGE MEDIUM, AND VEHICLE**

(30) Priority: 18.01.2024 CN 202410071826
(71) Applicant: BYD Company Limited, Shenzhen, Guangdong 518118 (CN)
(72) Inventor: MA, Weizhong, Shenzhen, Guangdong 518118 (CN); XU, Boliang, Shenzhen, Guangdong 518118 (CN); LV, Gaofeng, Shenzhen, Guangdong 518118 (CN); WANG, Jiquan, Shenzhen, Guangdong 518118 (CN)
(74) Representative: Mathys & Squire
(86) International application number: PCT/CN2024/129885
(87) International publication number: WO 2025/152564

(57) **Abstract**

A control method for a thermal management system is provided. The control method for a thermal management system includes: identifying an operating mode of a vehicle (S1); determining a thermal management mode of the vehicle according to the operating mode of the vehicle (S2); and controlling a corresponding component of the vehicle to operate according to the determined thermal management mode (S3). Intelligent control of a vehicle thermal management system can be implemented. The present invention further relates to an electronic device, a computer-readable storage medium, and a vehicle.

## Description

### CROSS-REFERENCE TO RELATED APPLICATIONS

The disclosure claims priority to Chinese Patent Application No. 202410071826.0, filed with the China National Intellectual Property Administration on January 18, 2024 and entitled "CONTROL METHOD FOR THERMAL MANAGEMENT SYSTEM, ELECTRONIC DEVICE, COMPUTER-READABLE STORAGE MEDIUM, AND VEHICLE", which is incorporated herein by reference in its entirety.

### TECHNICAL FIELD

The disclosure relates to the field of vehicle technologies, and in particular, to a control method for a thermal management system, an electronic device, a computer-readable storage medium, and a vehicle.

### BACKGROUND

With the rapid development of hybrid electric vehicles and the continuous evolution of related technologies, vehicle thermal management systems are facing severe challenges. A thermal management system of a hybrid electric vehicle is characterized by a large size, a complex structure, and functional redundancy. At an integrated vehicle control level, current research mostly focuses on improving system architecture, assembly configuration, component structure, and the like, to enhance the internal relationship between components. At the vehicle control level, specific parameter thresholds are mostly determined based on experience of engineers, and then a centralized cooling method or a thermal management strategy is formed through simple logic for vehicle determining and controlling.

In conventional technologies, thermal management subsystems of various vehicle components are independently controlled, exhibiting a high degree of isolation. A current method covers a limited number of driving scenarios and cannot comprehensively take into account vehicle economy and heat dissipation, which is unfavorable for intelligent control of the vehicle thermal management system. In addition, test calibration for obtaining parameter thresholds involves substantial workload and high time costs.

### SUMMARY

The disclosure is intended to resolve at least one of the technical problems in the conventional technologies. Therefore, an objective of the disclosure is to provide a control method for a thermal management system of a vehicle. The control method for a thermal management system of a vehicle can implement intelligent control of a vehicle thermal management system.

Another objective of the disclosure is to provide an electronic device.

Still another objective of the disclosure is to provide a computer-readable storage medium.

Still another objective of the disclosure is to provide a vehicle.

A control method for a thermal management system of a vehicle according to an embodiment of the disclosure includes: identifying an operating mode of the vehicle; determining a thermal management mode of the vehicle according to the operating mode of the vehicle; and controlling a corresponding component of the vehicle to operate according to the determined thermal management mode.

Therefore, by providing the control method for a thermal management system of a vehicle, the corresponding component of the vehicle is controlled, according to the operating mode of the vehicle, to operate according to the determined thermal management mode. In this way, corresponding thermal management modes can be matched based on different operating conditions of the vehicle, thereby comprehensively taking into account economy and heat dissipation, and improving control intelligence of a vehicle thermal management system.

In some examples of the disclosure, the operating mode of the vehicle includes an energy-saving condition, a normal condition, and a power condition, the thermal management mode of the vehicle includes an economy mode, a normal mode, and an intensive cooling mode, and determining the thermal management mode of the vehicle according to the operating mode of the vehicle includes the following steps: when the operating mode of the vehicle is the energy-saving condition, determining that the thermal management mode of the vehicle is the economy mode; when the operating mode of the vehicle is the normal condition, determining that the thermal management mode of the vehicle is the normal mode; and when the operating mode of the vehicle is the power condition, determining that the thermal management mode of the vehicle is the intensive cooling mode.

In some examples of the disclosure, determining the thermal management mode of the vehicle according to the operating mode of the vehicle further includes: simultaneously determining a thermal management mode of an engine thermal management system, a thermal management mode of a motor and motor control unit thermal management system, a thermal management mode of a battery thermal management system, and a thermal management mode of an air conditioning system of the vehicle according to the operating mode of the vehicle.

In some examples of the disclosure, the step of identifying an operating mode of the vehicle includes: identifying a driving intention of a driver, determining a power mode, and collecting an operating condition parameter, a control parameter, and a temperature parameter of the vehicle at a current moment; and determining the operating mode of the vehicle according to the operating condition parameter, the control parameter, and the temperature parameter of the vehicle.

In some examples of the disclosure, the step of controlling a corresponding component of the vehicle to operate according to the determined thermal management mode includes: controlling an electronic thermostat, an electric water pump, an electric fan, an electronically controlled water pump, and an active grille shutter to operate according to the determined thermal management mode.

In some examples of the disclosure, the step of controlling a corresponding component of the vehicle to operate according to the determined thermal management mode further includes: selecting an optimal operating parameter of the corresponding component of the vehicle from an optimization solution database according to the determined thermal management mode of the vehicle, wherein the optimization solution database is pre-created; and controlling the corresponding component of the vehicle to operate according to the selected optimal operating parameter.

In some examples of the disclosure, pre-creating the optimization solution database includes: establishing a vehicle high-temperature and low-temperature cooling loop coupled simulation model; selecting a plurality of typical driving conditions, and performing simulation analysis in a plurality of operating conditions according to the vehicle high-temperature and low-temperature cooling loop coupled simulation model, to obtain a simulation dataset; cleaning and processing the simulation dataset to obtain an input dataset and an output dataset; building a deep learning model, providing training process parameters in the deep learning model according to the input dataset and the output dataset, and completing training of the deep learning model to obtain a deep learning model with the highest prediction accuracy; randomly generating a large quantity of driving conditions, and obtaining optimal control parameters in different thermal management modes of the vehicle according to the deep learning model with the highest prediction accuracy by using energy consumption and heat dissipation as optimization objectives in each operating condition; and organizing the corresponding optimal control parameters in the different thermal management modes of the vehicle into the optimization solution database.

In some examples of the disclosure, the input dataset includes an operating condition parameter and a control parameter, and the output dataset includes a temperature parameter.

In some examples of the disclosure, building the deep learning model includes: building a convolutional neural network model, a long short-term memory network model, a gated recurrent unit model, and a model for learning a nonlinear mapping relationship between input data and output data.

In some examples of the disclosure, providing training process parameters includes: providing an activation function, a loss function, an optimization algorithm, a quantity of iteration steps, a learning rate, and a training set size parameter.

In some examples of the disclosure, randomly generating the large quantity of driving conditions includes: performing random sampling on the input dataset and the output dataset within valid ranges of the datasets by using a Latin hypercube sampling method, to generate a large quantity of driving conditions.

In some examples of the disclosure, the step of randomly generating the large quantity of driving conditions, and obtaining optimal control parameters in different thermal management modes of the vehicle according to the deep learning model with the highest prediction accuracy by using energy consumption and heat dissipation as optimization objectives in each operating condition further includes: performing multi-objective optimization with a gradient-based optimization algorithm by using energy consumption and heat dissipation as optimization objectives in each operating condition, to obtain the optimal control parameters in the different thermal management modes of the vehicle.

An electronic device according to the disclosure includes a processor and a memory. The memory stores a vehicle control program, and the vehicle control program is capable of running on the processor. When the vehicle control program is executed by the processor, the foregoing control method for a thermal management system of a vehicle is implemented.

A computer-readable storage medium according to the disclosure stores a vehicle control program. When the vehicle control program is executed by a processor, the foregoing control method for a thermal management system of a vehicle is implemented.

A vehicle according to the disclosure includes the foregoing electronic device.

Additional aspects and advantages of the disclosure are partially provided in the following descriptions, and partially become clear from the following descriptions, or are understood through practice of the disclosure.

### BRIEF DESCRIPTION OF DRAWINGS

The foregoing and/or additional aspects and advantages of the disclosure become clear and will be easy to understand from the descriptions of embodiments provided with reference to the following accompanying drawings.
FIG. 1 is a flowchart of a control method for a thermal management system of a vehicle according to an embodiment of the disclosure;
FIG. 2 is a partial flowchart of a control method for a thermal management system of a vehicle according to an embodiment of the disclosure;
FIG. 3 is a partial flowchart of a control method for a thermal management system of a vehicle according to an embodiment of the disclosure;
FIG. 4 is a partial flowchart of a control method for a thermal management system of a vehicle according to an embodiment of the disclosure;
FIG. 5 is a partial flowchart of a control method for a thermal management system of a vehicle according to an embodiment of the disclosure;
FIG. 6 is a schematic block diagram of an electronic device according to an embodiment of the disclosure; and
FIG. 7 is a schematic block diagram of a vehicle according to an embodiment of the disclosure.

Reference numerals:
1000: electronic device; 100: processor; 200: memory; and 2000: vehicle.

### DESCRIPTION OF EMBODIMENTS

The following describes embodiments of the disclosure in detail. The embodiments described with reference to the accompanying drawings are examples.

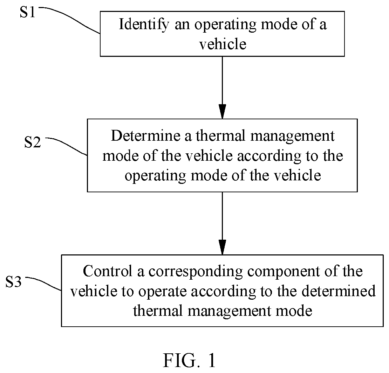

With reference to FIG. 1 to FIG. 5, the following describes a control method for a thermal management system of a vehicle according to an embodiment of the disclosure. The control method for a thermal management system of a vehicle may be applied to a vehicle.

With reference to FIG. 1, the control method for a thermal management system of a vehicle according to the disclosure may mainly include the following steps:
S1: identify an operating mode of the vehicle.
S2: determine a thermal management mode of the vehicle according to the operating mode of the vehicle.
S3: control a corresponding component of the vehicle to operate according to the determined thermal management mode.

Specifically, the control method for a thermal management system of a vehicle according to the disclosure is provided to identify the operating mode of the vehicle, so that the control method for a thermal management system of a vehicle can control a vehicle thermal management system according to the operating mode of the vehicle. In this way, the operating mode of the vehicle can be determined by using the control method for a thermal management system of a vehicle, so that the control method for a thermal management system of a vehicle correspondingly controls the vehicle thermal management system according to different operating modes of the vehicle.

Further, the control method for a thermal management system of a vehicle can determine, for the vehicle according to the identified operating mode of the vehicle, a vehicle thermal management mode corresponding to and matching the mode. Because both power and heat generated by the vehicle vary with the operating mode, different thermal management modes are correspondingly matched for different vehicle operating modes. This can correspondingly take into account fuel economy and heat dissipation of the vehicle in different operating modes, to implement intelligent control of the vehicle thermal management system.

Further, after the control method for a thermal management system of a vehicle determines the thermal management mode corresponding to the operating mode of the vehicle, an instruction is sent to a corresponding component involved in the thermal management system. Each corresponding component starts to operate according to the instruction from the control method for a thermal management system of a vehicle, to operate the thermal management mode determined in the control method for a thermal management system of a vehicle, so that the vehicle thermal management mode performs heat management on the corresponding component in the vehicle in the operating mode of the vehicle, to cool an overheated component and improve a vehicle heat dissipation effect. This helps improve vehicle performance in the operating mode of the vehicle. By matching the operating mode of the vehicle with a corresponding thermal management mode by using the control method for a thermal management system of a vehicle, driving scenarios of the vehicle covered by the control method for a thermal management system of a vehicle can be increased. By taking into account vehicle economy and heat dissipation in the operating mode, a thermal management control mode of the vehicle is optimized, thereby making the control method for a thermal management system of a vehicle more intelligent.

Therefore, by providing the control method for a thermal management system of a vehicle, the corresponding component of the vehicle is controlled, according to the operating mode of the vehicle, to operate according to the determined thermal management mode. In this way, corresponding thermal management modes can be matched based on different operating conditions of the vehicle, thereby comprehensively taking into account economy and heat dissipation, and improving control intelligence of a vehicle thermal management system.

According to an embodiment of the disclosure, the operating mode of the vehicle includes an energy-saving condition, a normal condition, and a power condition, and the thermal management mode of the vehicle includes an economy mode, a normal mode, and an intensive cooling mode. Specifically, when the vehicle operates in different operating conditions, different weights of economy and heat dissipation need to be taken into account during vehicle operation. When the operating mode of the vehicle is the energy-saving condition, fuel economy requirement is higher than a heat dissipation requirement during vehicle operation. When the operating mode of the vehicle is the normal condition, both fuel economy and heat dissipation need to be taken into account during vehicle operation. When the operating mode of the vehicle is the power condition, the heat dissipation requirement is higher than the fuel economy requirement during vehicle operation.

Further, based on the three operating conditions of the vehicle, namely, the energy-saving condition, the normal condition, and the power condition, three thermal management modes of the vehicle are correspondingly provided: the economy mode, the normal mode, and the intensive cooling mode. In this way, when the operating mode of the vehicle is different operating conditions, different thermal management modes of the vehicle may be correspondingly operated to meet different requirements of the vehicle for economy and heat dissipation during vehicle operation.

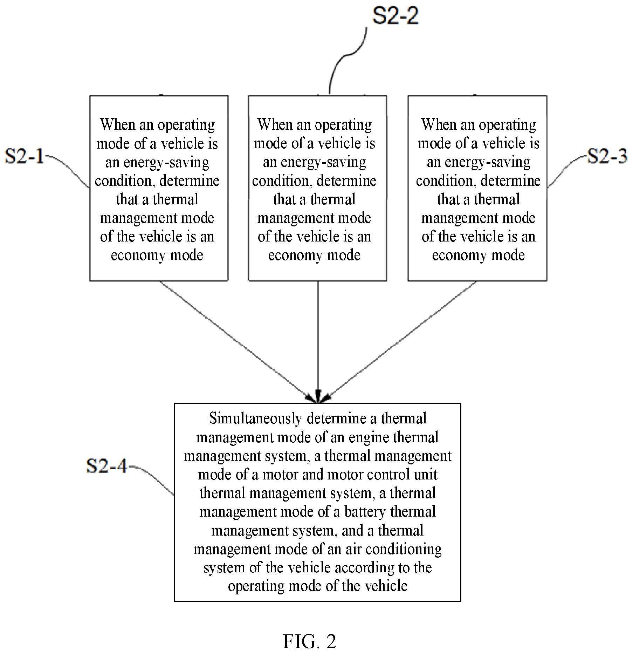

Further, with reference to FIG. 1 and FIG. 2, step S2 further includes the following steps:
S2-1: when the operating mode of the vehicle is the energy-saving condition, determine that the thermal management mode of the vehicle is the economy mode.
S2-2: when the operating mode of the vehicle is the normal condition, determine that the thermal management mode of the vehicle is the normal mode.
S2-3: when the operating mode of the vehicle is the power condition, determine that the thermal management mode of the vehicle is the intensive cooling mode.

In this embodiment of the disclosure, in the economy mode, the thermal management mode of the vehicle corresponds to the energy-saving condition of the vehicle, which can meet a requirement for lowest energy consumption while ensuring heat dissipation performance of the vehicle. In the normal mode, the thermal management mode of the vehicle corresponds to the normal condition of the vehicle. In this case, requirements of the vehicle for energy consumption and heat dissipation are comprehensively balanced. In the intensive cooling mode, the thermal management mode of the vehicle corresponds to the vehicle operating in the power condition. In this case, no energy consumption limitation is taken into account during vehicle operation, but it is preferentially ensured that the thermal management system has a sufficient safety margin. With such an arrangement, suitable thermal management modes may be provided for the vehicle in different operating conditions based on different driving requirements of a user, to improve the diversity of the control method for a thermal management system of a vehicle. This helps improve vehicle performance.

With reference to FIG. 1 and FIG. 2, step S2 further includes the following steps:
S2-4: simultaneously determine a thermal management mode of an engine thermal management system, a thermal management mode of a motor and motor control unit thermal management system, a thermal management mode of a battery thermal management system, and a thermal management mode of an air conditioning system of the vehicle according to the operating mode of the vehicle.

Specifically, in this embodiment of the disclosure, the thermal management system of the vehicle includes the engine thermal management system, the motor and motor control unit thermal management system, the battery thermal management system, and the air conditioning system. The engine thermal management system may perform heat management on an engine in the vehicle during operating, so that the engine can normally dissipate heat, to ensure operating efficiency of the engine. The motor and motor control unit thermal management system may perform heat management on motor and motor control unit core components in the vehicle, so that the motor and motor control unit core components in the vehicle can normally dissipate heat, to ensure operating performance of the motor and motor control unit. The battery thermal management system may perform heat management on a battery in the vehicle, to ensure heat dissipation of the battery, thereby improving battery performance, ensuring that the battery normally supplies power to an electrical component in the vehicle, and ensuring an endurance capability of the battery. The air conditioning system may perform thermal management on a passenger cabin of the vehicle and functional components in the vehicle, to implement vehicle heat circulation.

After the control method for a thermal management system of a vehicle determines the thermal management mode of the vehicle according to the operating mode of the vehicle, the thermal management modes of the engine thermal management system, the motor and motor control unit thermal management system, the battery thermal management system, and the air conditioning system of the vehicle are simultaneously determined, to perform integrated control on the engine, the motor and motor control unit, the battery, and an air conditioner in the vehicle. In this way, control isolation of a single thermal management system can be avoided, and a vehicle control effect can be enhanced.

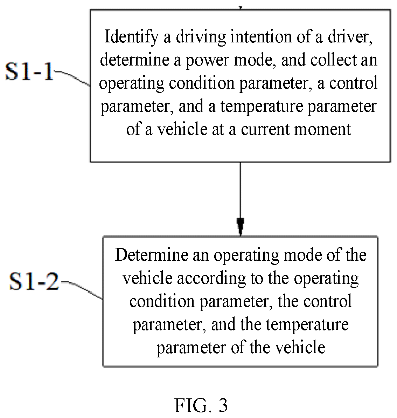

With reference to FIG. 1 and FIG. 3, step S1 further includes the following steps:
S1-1: identify a driving intention of a driver, determine a power mode, and collect an operating condition parameter, a control parameter, and a temperature parameter of the vehicle at a current moment.
S1-2: determine the operating mode of the vehicle according to the operating condition parameter, the control parameter, and the temperature parameter of the vehicle.

Specifically, when the control method for a thermal management system of a vehicle identifies the operating mode of the vehicle, the driving intention of the driver needs to be first determined, to ensure that the vehicle travels based on the driving intention of the driver when the thermal management system of the vehicle is controlled. According to some embodiments of the disclosure, before step S1-1, the control method for a thermal management system of a vehicle may determine the driving intention of the driver and determine the power mode according to an operating mode of the vehicle manually selected by the driver. When the driver manually selects an energy-saving mode, the operating mode of the vehicle is the energy-saving condition. When the driver manually selects a normal mode, the operating mode of the vehicle is the normal condition. When the driver manually selects the power mode, the operating mode of the vehicle is the power condition.

According to some other embodiments of the disclosure, before step S1-1, when the driver does not manually select the operating mode of the vehicle, the control method for a thermal management system of a vehicle may determine the driving intention of the driver and determine the power mode based on an engine speed. When the engine speed is less than a preset range, the control method for a thermal management system of a vehicle identifies that the operating mode of the vehicle is the energy-saving condition. When the engine speed is within a preset range, the control method for a thermal management system of a vehicle identifies that the operating mode of the vehicle is the normal condition. When the engine speed exceeds a preset range, the control method for a thermal management system of a vehicle identifies that the operating mode of the vehicle is the power condition. In this embodiment of the disclosure, the preset range of the engine speed may be provided based on vehicles of different models.

Further, after the control method for a thermal management system of a vehicle determines the power mode of the vehicle, the operating condition parameter, the control parameter, and the temperature parameter of the vehicle at the current moment may be collected. In this way, thermal management can be performed on the thermal management system of the vehicle according to various parameters in the current power mode of the vehicle. The control method for a thermal management system of a vehicle may determine a current operating mode of the vehicle according to the operating condition parameter, the control parameter, and the temperature parameter of the vehicle at the current moment. The operating condition parameter includes an ambient temperature, a vehicle speed, a slope, an intake air temperature, an engine speed, an engine torque, a generator speed, a generator torque, a motor speed, a motor torque, a battery state of charge, and compressor power. The control parameter includes an electronic thermostat opening, an electric water pump speed, an electric fan speed, an electronically controlled water pump speed, and an active grille shutter opening. The temperature parameter includes an engine coolant temperature, a generator temperature, a motor temperature, a generator insulated gate bipolar transistor temperature, a motor insulated gate bipolar transistor temperature, a battery temperature, an in-vehicle temperature, and the like.

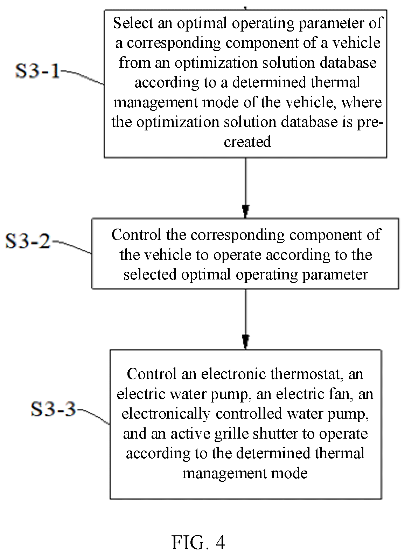

With reference to FIG. 1 and FIG. 4, step S3 includes the following steps:
S3-3: control an electronic thermostat, an electric water pump, an electric fan, an electronically controlled water pump, and an active grille shutter to operate according to the determined thermal management mode.

Specifically, the engine thermal management system implements thermal management on the engine through combined action of the electronic thermostat, the electric water pump, the electric fan, and the active grille shutter. The motor and motor control unit thermal management system implements thermal management on the motor and motor control unit core components through combined action of a mechanical oil pump, the electronically controlled water pump, the electric fan, and the active grille shutter. The battery thermal management system implements thermal management on the battery through the electronically controlled water pump. The air conditioning system regulates the air conditioner through combined action of the electric fan and the active grille shutter.

Further, after determining the thermal management mode of the vehicle, the control method for a thermal management system of a vehicle controls the electronic thermostat, the electric water pump, the electric fan, the electronically controlled water pump, and the active grille shutter to operate according to the determined thermal management mode of the vehicle. In this way, integrated control of the engine thermal management system, the motor and motor control unit thermal management system, the battery thermal management system, and the air conditioning system can be implemented, which helps enhance vehicle control effect. In this embodiment of the disclosure, the thermal management system of the vehicle includes but is not limited to the engine thermal management system, the motor and motor control unit thermal management system, the battery thermal management system, the air conditioning system, and another subsystem.

With reference to FIG. 1 and FIG. 4, step S3 includes the following steps:
S3-1: select an optimal operating parameter of the corresponding component of the vehicle from an optimization solution database according to the determined thermal management mode of the vehicle, where the optimization solution database is pre-created and used for quick indexing in the optimization solution database according to the determined thermal management mode of the vehicle.
S3-2: control the corresponding component of the vehicle to operate according to the selected optimal operating parameter.

Specifically, the control method for a thermal management system of a vehicle has the pre-created optimization solution database. After the control method for a thermal management system of a vehicle controls the corresponding component of the vehicle to operate according to the determined thermal management mode, the control method for a thermal management system of a vehicle may perform quick indexing in the pre-created optimization solution database of the corresponding component of the vehicle in different thermal management modes of the vehicle, so that the optimal operating parameter of the corresponding component of the vehicle can be quickly selected after the thermal management mode of the vehicle is determined. The optimal operating parameter includes an optimal opening of the electronic thermostat, an optimal speed of the electric water pump, an optimal speed of the electric fan, an optimal speed of the electronically controlled water pump, and an optimal opening of the active grille shutter. In this way, the control method for a thermal management system of a vehicle can control the engine thermal management system, the motor and motor control unit thermal management system, the battery thermal management system, and the air conditioning system to operate according to the selected optimal operating parameter of the corresponding component of the vehicle, thereby increasing an operating speed of the control method for a thermal management system of a vehicle and improving efficiency of the thermal management system of the vehicle.

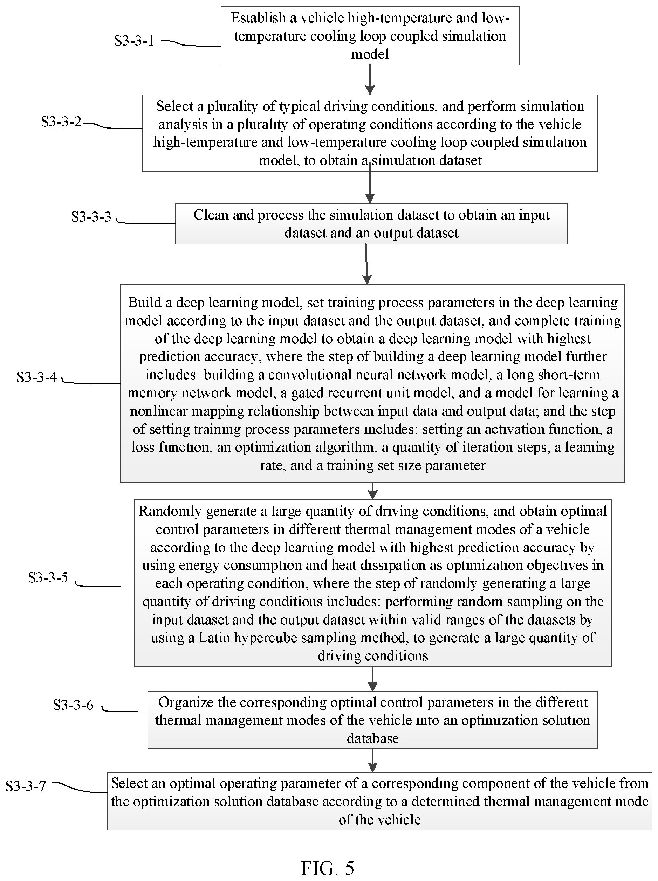

With reference to FIG. 1 and FIG. 5, the step of pre-creating the optimization solution database includes the following steps:
S3-3-1: establish a vehicle high-temperature and low-temperature cooling loop coupled simulation model.
S3-3-2: select a plurality of typical driving conditions, and perform simulation analysis in a plurality of operating conditions according to the vehicle high-temperature and low-temperature cooling loop coupled simulation model, to obtain a simulation dataset.
S3-3-3: clean and process the simulation dataset to obtain an input dataset and an output dataset.
S3-3-4: build a deep learning model, provide training process parameters in the deep learning model according to the input dataset and the output dataset, and complete training of the deep learning model to obtain a deep learning model with the highest prediction accuracy.
S3-3-5: randomly generate a large quantity of driving conditions, and obtain optimal control parameters in different thermal management modes of the vehicle according to the deep learning model with the highest prediction accuracy by using energy consumption and heat dissipation as optimization objectives in each operating condition.
S3-3-6: organize the corresponding optimal control parameters in the different thermal management modes of the vehicle into the optimization solution database.
S3-3-7: select the optimal operating parameter of the corresponding component of the vehicle from the optimization solution database according to the determined thermal management mode of the vehicle.

Specifically, a specific procedure of selecting the optimal operating parameter of the corresponding component of the vehicle according to the thermal management mode of the vehicle in the control method for a thermal management system of a vehicle includes step S3-3-1 to step S3-3-7. The establishing a vehicle high-temperature and low-temperature cooling loop coupled simulation model includes: constructing a vehicle high-temperature and low-temperature cooling loop coupled simulation model for the engine thermal management system, the motor and motor control unit thermal management system, the battery thermal management system, and the air conditioning system. During simulation analysis in a plurality of operating conditions on the vehicle, a plurality of typical driving conditions may be selected. This helps cover most driving conditions and can save time costs of a vehicle calibration test. In this embodiment of the disclosure, the control method for a thermal management system of a vehicle may perform simulation analysis in a plurality of operating conditions according to the simulation model in step S3-1, to obtain the simulation dataset.

Further, data cleaning may be performed on the simulation dataset obtained in step S3-2 to extract required driving data, and the driving data is processed into a matrix data form, to obtain the input dataset and the output dataset. After the input dataset and output data are obtained, the control method for a thermal management system of a vehicle may build the deep learning model. Compared with a conventional machine learning model, the deep learning model has higher accuracy. When applied to the thermal management system of the vehicle, the deep learning model can automatically learn complex data features, thereby reducing a requirement for manual feature engineering. In addition, the deep learning model may process a large amount of data and may be trained on a distributed computing system, making it scalable to a large dataset. The training process parameters may be provided according to the input dataset and the output dataset in the deep learning model, and training of the deep learning model is completed, so that the control method for a thermal management system of a vehicle can obtain the deep learning model with the highest prediction accuracy, to facilitate selection of the optimal operating parameter of the corresponding component of the vehicle for the thermal management mode of the vehicle.

Further, after training the deep learning model, the control method for a thermal management system of a vehicle randomly generates a large quantity of driving conditions to cover most driving conditions. This helps improve control accuracy of the control method for a thermal management system of a vehicle. Control parameters in different thermal management modes of the vehicle are obtained in each randomly generated driving condition according to the deep learning model with the highest prediction accuracy obtained through training, and the obtained control parameters are optimal control parameters obtained by using energy consumption and heat dissipation as optimization objectives, to improve control accuracy of the control method for a thermal management system of a vehicle for the engine thermal management system, the motor and motor control unit thermal management system, the battery thermal management system, and the air conditioning system. This helps improve the operating effect of the thermal management system of the vehicle. In the economy mode, the control method for a thermal management system of a vehicle considers a weight ratio of economy and heat dissipation as 9:1. In the normal mode, the control method for a thermal management system of a vehicle considers a weight ratio of economy and heat dissipation as 5:5. In the intensive cooling mode, the control method for a thermal management system of a vehicle considers a weight ratio of economy and heat dissipation as 1:9.

Further, after the corresponding optimal control parameters in the different thermal management modes of the vehicle are obtained, these optimal control parameters may be organized into the optimization solution database. In this way, the control method for a thermal management system of a vehicle can perform quick indexing in the optimization solution database according to the thermal management mode and the operating condition parameter of the vehicle, so that the control method for a thermal management system of a vehicle quickly selects optimal operating parameters of the corresponding component of the vehicle in corresponding thermal management modes of the vehicle for different driving conditions. In this way, the control method for a thermal management system of a vehicle in this embodiment of the disclosure can quickly obtain an optimal control solution based on a current driving condition, with simple execution and efficient control.

With reference to FIG. 5, in step S3-3-3,
the input dataset includes an operating condition parameter and a control parameter, and the output dataset includes a temperature parameter.

Specifically, the input dataset used to train the deep learning model includes the operating condition parameter and the control parameter, and the output dataset used to train the deep learning model includes the temperature parameter, that is, the deep learning model built in the control method for a thermal management system of a vehicle may be trained by using simulation data obtained after simulation analysis in a plurality of operating conditions is performed.

The operating condition parameter includes an ambient temperature, a vehicle speed, a slope, an intake air temperature, an engine speed, engine torque, a generator speed, generator torque, a motor speed, motor torque, a battery state of charge, compressor power, and other operating condition parameters of components such as the engine, the motor and motor control unit core components, the battery, and the air conditioner operating in the thermal management mode. The control parameter includes an electronic thermostat opening, an electric water pump speed, an electric fan speed, an electronically controlled water pump speed, an active grille shutter opening, and other control parameters of components with regulating and control functions in the thermal management system of the vehicle. The temperature parameter includes an engine coolant temperature, a generator temperature, a motor temperature, a generator insulated gate bipolar transistor temperature, a motor insulated gate bipolar transistor temperature, a battery temperature, an in-vehicle temperature, and other temperature parameters controlled by the thermal management system of the vehicle.

With reference to FIG. 5, the step of building a deep learning model further includes:
building a convolutional neural network model, a long short-term memory network model, a gated recurrent unit model, and a model for learning a nonlinear mapping relationship between input data and output data.

Specifically, the deep learning model built in the control method for a thermal management system of a vehicle is a neural network model. A deep neural network has high prediction accuracy and a high computation speed, which can not only improve accuracy of building the deep learning model, but also help increase the operating speed of the deep learning network. This helps improve control accuracy and an operating rate of the control method for a thermal management system of a vehicle. In this embodiment of the disclosure, the deep neural network model includes but is not limited to the convolutional neural network model, the long short-term memory network model, the gated recurrent unit model, and the model for learning a nonlinear mapping relationship between input data and output data.

With reference to FIG. 5, the step of providing training process parameters includes: providing an activation function, a loss function, an optimization algorithm, a quantity of iteration steps, a learning rate, and a training set size parameter. Specifically, when the deep learning model is trained according to the input dataset and the output dataset, the training process parameters need to be provided, including providing the activation function, the loss function, the optimization algorithm, the quantity of iteration steps, the learning rate, a training set size, and another training process parameter, to complete training of the deep learning model, and enable the control method for a thermal management system of a vehicle to obtain a model with the highest prediction accuracy.

With reference to FIG. 5, the step of randomly generating the large quantity of driving conditions includes: performing random sampling on the input dataset and the output dataset within valid ranges of the datasets by using a Latin hypercube sampling method, to generate a large quantity of driving conditions. Specifically, in the Latin hypercube sampling method, sample space may be divided into several equal subintervals, and then a sample point is randomly selected from each subinterval, which can ensure uniform distribution of sample points in each dimension, and can effectively avoid the problem of duplicate samples and sample clustering while maintaining randomness.

Further, when random sampling is performed within the valid ranges of the datasets by using the Latin hypercube sampling method, the large quantity of generated random driving conditions exhibit randomness. When a control weight ratio of economy and heat dissipation is obtained according to the deep learning model with the highest prediction accuracy and by using energy consumption and heat dissipation in each operating condition, not only a quantity of experiments performed in the control method for a thermal management system of a vehicle can be reduced to save obtaining time and costs, but also a deviation and an error between an obtained result and an actual result of the vehicle can be avoided to help improve reliability and accuracy of the obtained result, thereby helping improve control efficiency and effect of the control method for a thermal management system of a vehicle for the thermal management system of the vehicle in different thermal management modes.

According to some embodiments of the application, step S3-3-5 further includes:
performing multi-objective optimization with a gradient-based optimization algorithm by using energy consumption and heat dissipation as optimization objectives in each operating condition, to obtain the optimal control parameters in the different thermal management modes of the vehicle.

Specifically, the optimal control parameters, in the different thermal management modes of the vehicle, obtained in the control method for a thermal management system of a vehicle are obtained through the gradient-based optimization algorithm. The gradient-based optimization algorithm has a high convergence speed and high optimization efficiency, enabling rapid obtaining of the optimal control parameters in the different thermal management modes of the vehicle. Compared with the conventional technologies in which vehicle calibration needs to depend on experience of engineers, the gradient-based optimization algorithm used in the disclosure can significantly save time costs of the vehicle calibration test, thereby effectively improving control efficiency of the control method for a thermal management system of a vehicle.

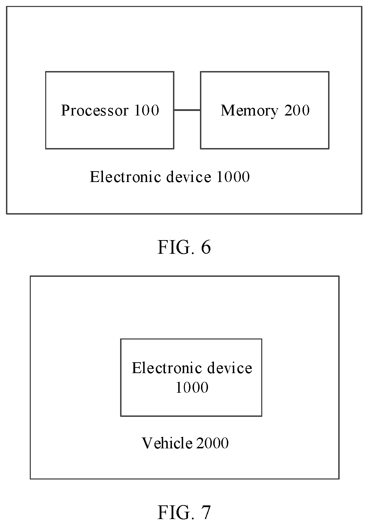

An electronic device 1000 according to an embodiment of the disclosure may mainly include a processor 100 and a memory 200, as shown in FIG. 6. The memory 200 stores a vehicle control program, and the vehicle control program is capable of running on the processor 100. When the vehicle control program is executed by the processor, the control method for a thermal management system of a vehicle in the embodiments of the disclosure is implemented. In this way, the vehicle control program stored in the memory 200 is applied to the processor 100. Under processing by the processor 100, the vehicle control program may implement the control method for a thermal management system of a vehicle in the embodiments of the disclosure. To reduce redundancy, details are not described herein again.

A vehicle 2000 according to an embodiment of the disclosure may mainly include the foregoing electronic device 1000, as shown in FIG. 7. In this way, not only intelligence and reliability of the vehicle 2000 can be improved, but also driving and use of the vehicle 2000 by a user can be facilitated.

A computer-readable storage medium (for example, a non-volatile computer-readable storage medium) according to an embodiment of the disclosure stores a vehicle control program. When the vehicle control program is executed by a processor, the control method for a thermal management system of a vehicle in the embodiments of the disclosure is implemented.

According to an embodiment of the disclosure, the control method for a thermal management system of a vehicle is applicable to the vehicle 2000. Three vehicle thermal management modes, namely, an economy mode, a normal mode, and an intensive cooling mode, are provided for the vehicle 2000 for which the control method for a thermal management system of a vehicle in the embodiments of the disclosure is configured, to correspondingly match an energy-saving condition, a normal condition, and a power condition of the vehicle, thereby providing diversified thermal management control solutions. The control method for a thermal management system of a vehicle in the embodiments of the disclosure combines an engine thermal management system, a motor and motor control unit thermal management system, a battery thermal management system, and an air conditioning system of the vehicle, to implement integrated control of vehicle thermal management subsystems. This can comprehensively take into account vehicle economy and heat dissipation and enhance a control effect of vehicle thermal management.

Further, in the embodiments of the disclosure, the control method for a thermal management system of a vehicle may implement multi-objective optimization in the thermal management mode of the vehicle by comprehensively taking into account economy and heat dissipation based on a deep learning method and a gradient-based optimization method, which can improve algorithm optimization efficiency and save time costs.

In addition, in the embodiments of the disclosure, the control method for a thermal management system of a vehicle may form an optimization solution database. Optimal control parameters for different operating conditions in different thermal management modes are embedded in a vehicle control solution in a database form, so that the control method for a thermal management system of a vehicle can quickly obtain an optimal control solution based on a current driving condition. In this way, the control method for a thermal management system of a vehicle in the embodiments of the disclosure is applicable to a plurality of driving conditions and thermal management modes, thereby helping reduce complexity of a vehicle control system, and helping make a control process of the thermal management system of the vehicle simpler and more efficient.

In the descriptions of the disclosure, it will be understood that the orientations or positional relationships indicated by the terms "center", "longitudinal", "transversal", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the accompanying drawings, and are only for ease of describing the disclosure and simplifying the description, rather than indicating or implying that an indicated apparatus or element needs to have a specific orientation or be constructed and operated in a specific orientation. Therefore, this will not be understood as a limitation on the disclosure.

In the descriptions of this specification, descriptions provided with reference to terms such as "an embodiment", "some embodiments", "an example embodiment", "an example", "a specific example", or "some examples" mean that specific features, structures, materials, or characteristics described with reference to the embodiment or example are included in at least one embodiment or example of the disclosure. In this specification, illustrative descriptions of the foregoing terms do not necessarily refer to the same embodiment or example.

Although the embodiments of the disclosure are shown and described, a person of ordinary skill in the art will understand that various changes, modifications, replacements, and variations may be made to these embodiments without departing from the principles and objectives of the disclosure, and the scope of the disclosure is defined by the claims and equivalents thereof.

## Claims

1. A control method for a thermal management system of a vehicle, comprising:
identifying an operating mode of the vehicle (S1);
determining a thermal management mode of the vehicle according to the operating mode of the vehicle (S2); and
controlling a corresponding component of the vehicle to operate according to the determined thermal management mode (S3).

2. The control method for a thermal management system of a vehicle according to claim 1, wherein the operating mode of the vehicle comprises an energy-saving condition, a normal condition, and a power condition, the thermal management mode of the vehicle comprises an economy mode, a normal mode, and an intensive cooling mode, and determining the thermal management mode of the vehicle according to the operating mode of the vehicle (S2) comprises the following steps:
when the operating mode of the vehicle is the energy-saving condition, determining that the thermal management mode of the vehicle is the economy mode (S2-1);
when the operating mode of the vehicle is the normal condition, determining that the thermal management mode of the vehicle is the normal mode (S2-2); and
when the operating mode of the vehicle is the power condition, determining that the thermal management mode of the vehicle is the intensive cooling mode (S2-3).

3. The control method for a thermal management system of a vehicle according to claim 2, wherein determining the thermal management mode of the vehicle according to the operating mode of the vehicle (S2) further comprises:
simultaneously determining a thermal management mode of an engine thermal management system, a thermal management mode of a motor and motor control unit thermal management system, a thermal management mode of a battery thermal management system, and a thermal management mode of an air conditioning system of the vehicle according to the operating mode of the vehicle (S4).

4. The control method for a thermal management system of a vehicle according to any one of claims 1 to 3, wherein identifying the operating mode of the vehicle (S1) comprises:
identifying a driving intention of a driver, determining a power mode, and collecting an operating condition parameter, a control parameter, and a temperature parameter of the vehicle at a current moment (S1-1); and
determining the operating mode of the vehicle according to the operating condition parameter, the control parameter, and the temperature parameter of the vehicle (S1-2).

5. The control method for a thermal management system of a vehicle according to any one of claims 1 to 4, wherein controlling the corresponding component of the vehicle to operate according to the determined thermal management mode (S3) comprises:
controlling an electronic thermostat, an electric water pump, an electric fan, an electronically controlled water pump, and an active grille shutter to operate according to the determined thermal management mode (S3-3).

6. The control method for a thermal management system of a vehicle according to any one of claims 1 to 5, wherein controlling the corresponding component of the vehicle to operate according to the determined thermal management mode (S3) comprises:
selecting an optimal operating parameter of the corresponding component of the vehicle from an optimization solution database according to the determined thermal management mode of the vehicle (S3-1), wherein the optimization solution database is pre-created; and
controlling the corresponding component of the vehicle to operate according to the selected optimal operating parameter (S3-2).

7. The control method for a thermal management system of a vehicle according to claim 6, wherein pre-creating the optimization solution database comprises:
establishing a vehicle high-temperature and low-temperature cooling loop coupled simulation model (S3-3-1);
selecting a plurality of typical driving conditions, and performing simulation analysis in a plurality of operating conditions according to the vehicle high-temperature and low-temperature cooling loop coupled simulation model, to obtain a simulation dataset (S3-3-2);
cleaning and processing the simulation dataset to obtain an input dataset and an output dataset (S3-3-3);
building a deep learning model, providing training process parameters in the deep learning model according to the input dataset and the output dataset, and completing training of the deep learning model to obtain a deep learning model with the highest prediction accuracy (S3-3-4);
randomly generating a large quantity of driving conditions, and obtaining optimal control parameters in different thermal management modes of the vehicle according to the deep learning model with the highest prediction accuracy by using energy consumption and heat dissipation as optimization objectives in each operating condition (S3-3-5); and
organizing the corresponding optimal control parameters in the different thermal management modes of the vehicle into the optimization solution database (S3-3-6).

8. The control method for a thermal management system of a vehicle according to claim 7, wherein the input dataset comprises an operating condition parameter and a control parameter, and the output dataset comprises a temperature parameter.

9. The control method for a thermal management system of a vehicle according to claim 7 or 8, wherein building the deep learning model comprises:
building a convolutional neural network model, a long short-term memory network model, a gated recurrent unit model, and a model for learning a nonlinear mapping relationship between input data and output data.

10. The control method for a thermal management system of a vehicle according to any one of claims 7 to 9, wherein providing training process parameters comprises: providing an activation function, a loss function, an optimization algorithm, a quantity of iteration steps, a learning rate, and a training set size parameter.

11. The control method for a thermal management system of a vehicle according to any one of claims 7 to 10, wherein randomly generating the large quantity of driving conditions comprises:
performing random sampling on the input dataset and the output dataset within valid ranges of the datasets by using a Latin hypercube sampling method, to generate a large quantity of driving conditions.

12. The control method for a thermal management system of a vehicle according to any one of claims 7 to 11, wherein randomly generating the large quantity of driving conditions, and obtaining optimal control parameters in different thermal management modes of the vehicle according to the deep learning model with the highest prediction accuracy by using energy consumption and heat dissipation as optimization objectives in each operating condition (S3-3-5) further comprises:
performing multi-objective optimization with a gradient-based optimization algorithm by using energy consumption and heat dissipation as optimization objectives in each operating condition, to obtain the optimal control parameters in the different thermal management modes of the vehicle.

13. An electronic device (1000), comprising:
a processor (100); and
a memory (200), the memory (200) storing a vehicle control program, the vehicle control program being capable of running on the processor (100), and when the vehicle control program is executed by the processor (100), the control method for a thermal management system of a vehicle according to any one of claims 1 to 12 being implemented.

14. A computer-readable storage medium, the computer-readable storage medium storing a vehicle control program, and when the vehicle control program is executed by a processor, the control method for a thermal management system of a vehicle according to any one of claims 1 to 12 being implemented.

15. A vehicle (2000), comprising the electronic device (1000) according to claim 14.
